# EUROPEAN PATENT APPLICATION

(11) **EP 4 030 691 A1**
(43) Date of publication of application: **20.07.2022**
(21) Application number: 20876189.0
(22) Date of filing: 21.09.2020
(51) Int. Cl.: H04L 12/24

(54) **DATA PROCESSING METHOD, DEVICE, AND SYSTEM**

(30) Priority: 16.10.2019 CN 201910984111; 01.11.2019 CN 201911061787
(71) Applicant: Huawei Technologies Co., Ltd., Longgang District Shenzhen, Guangdong 518129 (CN)
(72) Inventor: TAO, Ran, Shenzhen, Guangdong 518129 (CN); WANG, Zitao, Shenzhen, Guangdong 518129 (CN); WU, Qin, Shenzhen, Guangdong 518129 (CN); QIN, Xiaopeng, Shenzhen, Guangdong 518129 (CN); YANG, Yu, Shenzhen, Guangdong 518129 (CN)
(74) Representative: Körber, Martin Hans
(86) International application number: PCT/CN2020/116542
(87) International publication number: WO 2021/073367

(57) **Abstract**

A data processing method, a device, and a system are provided. The method includes: A network management device generates an extended ECA instance. The extended ECA instance includes a first event, a first condition, and a first action, the first action includes a first object identifier and a first indicator type, the first object identifier indicates a first to-be-monitored object, the first indicator type indicates a performance indicator of the first to-be-monitored object, the extended ECA instance is used to indicate a network device managed by the network management device to send first monitoring data to the network management device based on the first event and the first condition, and the network device includes the first to-be-monitored object. Then, the network management device sends a first message to the network device, where the first message includes the extended ECA instance. In addition, the network management device receives a second message sent by the network device, where the second message includes the first monitoring data. Therefore, automatic association between a network event and telemetry is implemented based on an extended ECA model.

## Description

This application claims priority to Chinese Patent Application No. 201910984111.3, filed on October 16, 2019 and entitled "DATA PROCESSING METHOD, DEVICE, AND SYSTEM", and to Chinese Patent Application No. 201911061787.1, filed on November 1, 2019 and entitled "DATA PROCESSING METHOD, DEVICE, AND SYSTEM", both of which are incorporated herein by reference in their entireties.

### TECHNICAL FIELD

This application relates to the field of communication technologies, and in particular, to a data processing method, a device, and a system.

### BACKGROUND

A network configuration protocol (network configuration protocol, NETCONF) is a network management protocol based on an extensible markup language (extensible markup language, XML), and provides a programmable method for configuring and managing a network device. A user may set a parameter, obtain a parameter value, obtain statistics, and the like by using the protocol. A NETCONF packet is in an XML format and has a powerful filtering capability. Each data item has a fixed element name and a fixed location. Therefore, different devices of a same vendor have a same access mode and result presentation mode, and devices of different vendors can achieve a same effect through XML mapping. This facilitates development of the NETCONF packet on third-party software, and it is easy to develop customized network management software in an environment with different vendors and devices. With help of such network management software, a function of the NETCONF makes configuration and management of a network device easier and more efficient.

YANG (Yet Another Next Generation) is a data modeling language for NETCONF access. The NETCONF uses the YANG to model various operations, data, and notifications, which is readable and extensible. Both a device and a client can perform modeling by using the YANG. After the device provides a YANG model, the client can automatically generate corresponding access model code by using a tool, to reduce development workloads.

A RESTCONF is a hypertext transfer protocol (hypertext transfer protocol, HTTP)-based protocol that configures data in the YANG based on a data storage concept defined in the NETCONF.

A telemetry (telemetry) technology is a technology for remotely collecting data from a physical network device or a virtual network device at a high speed. The telemetry technology provides a data collection function in real time and with a higher speed by using a push mode. In addition, this improves usage of a network device and a network during collection.

An event-condition-action (event-condition-action, ECA) model can model a generic policy, and allow monitoring of a specific type of parameter in a device/controller. When a trigger condition is met, an event occurs. In an actual network scenario, an action part in the ECA model only supports to reconfigure a network device running the ECA model or record triggering of a related event.

### SUMMARY

In view of this, embodiments of this application provide a data processing method, a device, and a system. A network management device sends an extended ECA instance to a network device, and an action part included in the extended ECA instance may trigger a telemetry function of the network device. Therefore, the network device may trigger the telemetry function based on an event part included in the extended ECA instance, and send corresponding telemetry data to the network management device. Therefore, automatic association between a network event and telemetry is implemented based on an extended ECA model.

Technical solutions provided in the embodiments of this application are as follows.

According to a first aspect, a data processing method is provided. The method includes: A network management device generates an extended ECA instance. The extended ECA instance includes a first event, a first condition, and a first action, the first action includes a first object identifier and a first indicator type, the first object identifier indicates a first to-be-monitored object, the first indicator type indicates a performance indicator of the first to-be-monitored object, the extended ECA instance is used to indicate a network device managed by the network management device to send first monitoring data to the network management device based on the first event and the first condition, and the network device includes the first to-be-monitored object. Then, the network management device sends a first message to the network device, where the first message includes the extended ECA instance. In addition, the network management device receives a second message sent by the network device, where the second message includes the first monitoring data.

Based on the solution provided in this embodiment, the network device may trigger a telemetry function based on an event part included in the extended ECA instance, and send corresponding telemetry data to the network management device. Therefore, automatic association between a network event and telemetry is implemented based on an extended ECA model.

In a possible implementation in the first aspect, before the network management device receives the second message sent by the network device, the method further includes: The network management device sends a request message to the network device, where the request message is used to request the network device to send the second message.

In still another possible implementation in the first aspect, that the network management device sends a request message to the network device includes: The network management device sends the request message to the network device at a preset frequency.

In yet another possible implementation in the first aspect, before the network management device generates the extended ECA instance, the method further includes: The network management device obtains an extended ECA model, where the extended ECA model indicates the network management device to generate the extended ECA instance based on the extended ECA model and an event that needs to be monitored.

Optionally, the first action further includes a second object identifier and a second indicator type, the second object identifier indicates a second to-be-monitored object, the second indicator type indicates a performance indicator of the second to-be-monitored object, the extended ECA instance is further used to indicate the network device to send, to the network management device based on the first event and the first condition, second monitoring data that corresponds to the second indicator type and that is for the second to-be-monitored object, the network device includes the second to-be-monitored object, and the second message further includes the second monitoring data.

Optionally, the first action further includes a group identifier, and the group identifier indicates a service type associated with the extended ECA instance.

Optionally, the first action further includes an enabling flag, and the enabling flag is used to enable the first action.

Optionally, the first action further includes a first operation type and/or a first indicator value type, the first operation type indicates an attribute of the first monitoring data, and the first indicator value type indicates a data type of the first monitoring data.

In yet another possible implementation in the first aspect, before the network management device sends the first message to the network device, the method further includes: The network management device establishes a network configuration protocol NETCONF session or a RESTCONF session between the network management device and the network device.

According to a second aspect, a data processing method is provided. The method includes: A network device receives a first message sent by a network management device. The first message includes an extended ECA instance, the extended ECA instance includes a first event, a first condition, and a first action, the first action includes a first object identifier and a first indicator type, the first object identifier indicates a first to-be-monitored object, the first indicator type indicates a performance indicator of the first to-be-monitored object, and the network device includes the first to-be-monitored object. When determining that the first condition is met, the network device determines that the first event occurs. When determining that the first event occurs, the network device sends a second message to the network management device, where the second message includes first monitoring data.

Based on the solution provided in this embodiment, the network device may trigger a telemetry function based on an event part included in the extended ECA instance, and send corresponding telemetry data to the network management device. Therefore, automatic association between a network event and telemetry is implemented based on an extended ECA model.

In a possible implementation in the second aspect, before the network device sends the second message to the network management device, the method further includes: The network device receives a request message sent by the network management device, where the request message is used to request the network device to send the second message.

Optionally, the first action further includes a second object identifier and a second indicator type, the second object identifier indicates a second to-be-monitored object, the second indicator type indicates a performance indicator of the second to-be-monitored object, the network device includes the second to-be-monitored object, the second message further includes the second monitoring data, and the second monitoring data is monitoring data that corresponds to the second indicator type and that is for the second to-be-monitored object.

Optionally, the first action further includes a group identifier, the group identifier indicates a service type associated with the extended ECA instance, and the first monitoring data is monitoring data associated with the service type.

In still another possible implementation in the second aspect, the first action further includes an enabling flag, the enabling flag is used to enable the first action, and before the network device determines that the first condition is met, the method further includes: The network device enables, based on the enabling flag, a function of sending the monitoring data, where the monitoring data is associated with running of the first action.

Optionally, the second message further includes the group identifier, and the group identifier indicates a service type associated with the extended ECA instance.

Optionally, the second message further includes an event identifier, and the event identifier indicates the first event.

Optionally, the second message further includes the first object identifier and the first indicator type.

In the foregoing first aspect or second aspect, optionally, the first condition is a condition, met by the first to-be-monitored object, of the performance indicator indicated by the first indicator type.

In the foregoing first aspect or second aspect, optionally, the first condition is a condition, met by the first to-be-monitored object, of a performance indicator indicated by a third indicator type, and the third indicator type is different from the first indicator type.

According to a third aspect, a network management device is provided. The network management device has a function of implementing behavior of the network management device in the foregoing method. The function may be implemented based on hardware, or may be implemented based on hardware executing corresponding software. The hardware or the software includes one or more modules corresponding to the foregoing function.

In a possible design, a structure of the network management device includes a processor and an interface, and the processor is configured to support the network management device in executing a corresponding function in the foregoing method. The interface is configured to support communication between the network management device and a network device, and receive information or instructions in the foregoing method from the network device. The network management device may further include a memory. The memory is configured to be coupled to the processor, and the memory stores program instructions and data that are necessary for the network management device.

In another possible design, the network management device includes a processor, a transmitter, a receiver, a random access memory, a read-only memory, and a bus. The processor is separately coupled to the transmitter, the receiver, the random access memory, and the read-only memory through the bus. When the network management device needs to run, a basic input/output system cured in the read-only memory or a bootloader system in an embedded system is used for startup, so that the network management device enters a normal running state. After the network management device enters the normal running state, an application program and an operating system run in the random access memory, so that the processor performs the method in any one of the first aspect or the possible implementations of the first aspect.

According to a fourth aspect, a network management device is provided. The network management device includes a main control board and an interface board, and may further include a switching board. The network management device is configured to perform the method in any one of the first aspect or the possible implementations of the first aspect. Specifically, the network management device includes a module configured to perform the method in any one of the first aspect or the possible implementations of the first aspect.

According to a fifth aspect, a network management device is provided. The network management device includes a controller and a first forwarding sub-device. The first forwarding sub-device includes an interface board, and may further include a switching board. The first forwarding sub-device is configured to execute a function of the interface board in the fourth aspect, and may further execute a function of the switching board in the fourth aspect. The controller includes a receiver, a processor, a transmitter, a random access memory, a read-only memory, and a bus. The processor is separately coupled to the receiver, the transmitter, the random access memory, and the read-only memory through the bus. When the controller needs to run, a basic input/output system cured in the read-only memory or a bootloader system in an embedded system is used for startup, so that the controller enters a normal running state. After the controller enters the normal running state, an application program and an operating system run in the random access memory, to enable the processor to execute a function of the main control board in the fourth aspect.

According to a sixth aspect, a computer storage medium is provided, configured to store a program, code, or instructions used by the foregoing network management device. When executing the program, the code, or the instructions, a processor or a hardware device may execute a function of the network management device or perform steps in the first aspect.

According to a seventh aspect, a network device is provided. The network device has a function of implementing behavior of the network device in the foregoing method. The function may be implemented based on hardware, or may be implemented based on hardware executing corresponding software. The hardware or the software includes one or more modules corresponding to the foregoing function.

In a possible design, a structure of the network device includes a processor and an interface, and the processor is configured to support the network device in executing a corresponding function in the foregoing method. The interface is configured to support communication between the network device and a network management device, and send information or instructions in the foregoing method to the network management device. The network device may further include a memory. The memory is configured to be coupled to the processor, and the memory stores program instructions and data that are necessary for the network device.

In another possible design, the network device includes a processor, a transmitter, a receiver, a random access memory, a read-only memory, and a bus. The processor is separately coupled to the transmitter, the receiver, the random access memory, and the read-only memory through the bus. When the network device needs to run, a basic input/output system cured in the read-only memory or a bootloader system in an embedded system is used for startup, so that the network device enters a normal running state. After the network device enters the normal running state, an application program and an operating system run in the random access memory, so that the processor performs the method in any one of the second aspect or the possible implementations of the second aspect.

According to an eighth aspect, a network device is provided. The network device includes a main control board and an interface board, and may further include a switching board. The network device is configured to perform the method in any one of the second aspect or the possible implementations of the second aspect. Specifically, the network device includes a module configured to perform the method in any one of the second aspect or the possible implementations of the second aspect.

According to a ninth aspect, a network device is provided. The network device includes a controller and a second forwarding sub-device. The second forwarding sub-device includes an interface board, and may further include a switching board. The second forwarding sub-device is configured to execute a function of the interface board in the eighth aspect, and may further execute a function of the switching board in the eighth aspect. The controller includes a receiver, a processor, a transmitter, a random access memory, a read-only memory, and a bus. The processor is separately coupled to the receiver, the transmitter, the random access memory, and the read-only memory through the bus. When the controller needs to run, a basic input/output system cured in the read-only memory or a bootloader system in an embedded system is used for startup, so that the controller enters a normal running state. After the controller enters the normal running state, an application program and an operating system run in the random access memory, to enable the processor to execute a function of the main control board in the eighth aspect.

According to a tenth aspect, a computer storage medium is provided, configured to store a program, code, or instructions used by the foregoing network device. When executing the program, the code, or the instructions, a processor or a hardware device may execute a function of the network device or perform steps in the second aspect.

According to an eleventh aspect, a network system is provided. The network system includes a network management device and a network device, the network management device is the network management device in the third aspect, the fourth aspect, or the fifth aspect, and the network device is the network device in the seventh aspect, the eighth aspect, or the ninth aspect.

Based on the foregoing solution, the network management device generates the extended ECA instance, and sends the extended ECA instance to the network device. When determining that the first condition in the extended ECA instance is met, the network device triggers occurrence of the first event in the extended ECA instance, and then triggers the first action (the telemetry function) in the extended ECA instance, to send the corresponding telemetry data to the network management device. In this way, the extended ECA model implements automatic association between the network event in the network device and the telemetry function, so that the network device can automatically start the telemetry function and send the telemetry data based on the occurring network event.

### BRIEF DESCRIPTION OF DRAWINGS

FIG. 1 is a schematic diagram of a structure of a communication network according to an embodiment of this application;
FIG. 2 is a flowchart of a data processing method according to an embodiment of this application;
FIG. 3 is a schematic diagram of a structure of a network management device according to an embodiment of this application;
FIG. 4 is a schematic diagram of a hardware structure of a network management device according to an embodiment of this application;
FIG. 5 is a schematic diagram of a hardware structure of a network management device according to an embodiment of this application;
FIG. 6 is a schematic diagram of a structure of a network device according to an embodiment of this application;
FIG. 7 is a schematic diagram of a hardware structure of a network device according to an embodiment of this application; and
FIG. 8 is a schematic diagram of a hardware structure of a network device according to an embodiment of this application.

### DESCRIPTION OF EMBODIMENTS

The following separately provides detailed description by using specific embodiments.

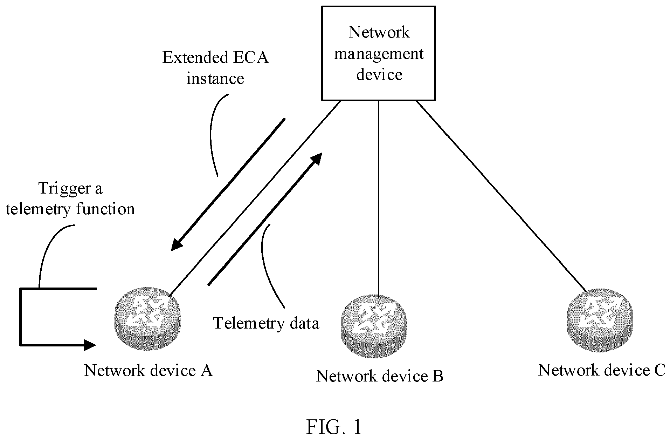

FIG. 1 is a schematic diagram of a structure of a communication network according to an embodiment of this application. As shown in FIG. 1, the communication network includes a network management device and a network device. In an implementation of this application, a quantity of network devices is not limited. For example, the communication network shown in FIG. 1 includes a network device A, a network device B, and a network device C. The network management device separately communicates with the network device A, the network device B, and the network device C by using a communication link. In this implementation of this application, without additional description, the network device may be any one of the network device A, the network device B, and the network device C. The network management device may be considered as a management device in the communication network, and the network device A, the network device B, and the network device C may be considered as managed devices in the communication network. The network management device may be an independent hardware device, for example, a server or a controller. Alternatively, the network management device may include a plurality of hardware devices. For example, the network management device includes a control device and a client device. The control device communicates with the network device by using the communication link, and the client device communicates with the control device by using a wired link or a wireless link. The network device may be an independent hardware device, for example, a router or a switch. In addition, the network device may include a plurality of forwarding boards. Each forwarding board includes a physical port to communicate with another network device, and each forwarding board may include a central processing unit (Central Processing Unit, CPU). Alternatively, the network device may include a plurality of hardware devices. For example, the network device includes a router and a plurality of hosts, and the router separately communicates with the plurality of hosts.

The network management device sends an extended ECA instance to the network device (for example, the network device A in FIG. 1). In a possible implementation, the network management device may directly generate the extended ECA instance, and then send the extended ECA instance to the network device. In another possible implementation, the network management device may first generate an extended ECA model, generate the corresponding extended ECA instance based on the extended ECA model, and then send the extended ECA instance to the network device.

The extended ECA model may be implemented based on a NETCONF. Specifically, the extended ECA model is implemented based on a YANG model. The extended ECA model may include an event, a condition, and an action. The event indicates a network event related to the network device. The condition indicates a condition that can trigger occurrence of the network event. The action indicates that a corresponding telemetry function is triggered when the event occurs. Therefore, the extended ECA model indicates that when the condition is met, the event is triggered, and the corresponding action (the telemetry function) is triggered after the event occurs.

The extended ECA model is a generic model. The network management device may generate the extended ECA instance based on the extended ECA model and a specific telemetry indicator that needs to be monitored. Therefore, the extended ECA instance is a specific monitoring instance generated based on the extended ECA model. For example, the network management device wants to monitor CPU usage of the network device, and when the CPU usage is greater than a threshold, the network device is required to send the CPU usage that exceeds the threshold to the network management device. The network management device may generate a first event based on the event part in the extended ECA model and a specific event related to the CPU usage (for example, reporting the CPU usage to the network management device), generate a first condition based on the condition part in the extended ECA model and a specific condition related to the CPU usage (for example, the CPU usage is greater than the threshold), and generate a first action based on the action part in the extended ECA model and a specific action related to the CPU usage (for example, sending telemetry data corresponding to the CPU usage). Therefore, the extended ECA instance may include the first event, the first condition, and the first action. The first event, the first condition, and the first action in the extended ECA instance are implementations of the specific monitoring instance of the event, the condition, and the action in the extended ECA model.

The network device receives the extended ECA instance sent by the network management device. In a possible implementation, the extended ECA instance is implemented in an XML format. After receiving the extended ECA instance, the network device runs the extended ECA instance. When determining that the first condition in the extended ECA instance is met, the network device triggers occurrence of the first event in the extended ECA instance. Then, when determining that the first event occurs, the network device triggers the first action in the corresponding extended ECA instance (namely, the telemetry function shown in FIG. 1). The network device triggers the telemetry function, and generates the corresponding telemetry data based on the telemetry function. Then, the network device sends the telemetry data to the network management device. For a specific implementation, refer to description in subsequent method implementations.

Based on the foregoing implementations, the network management device generates the extended ECA instance, and sends the extended ECA instance to the network device. When determining that the first condition in the extended ECA instance is met, the network device triggers occurrence of the first event in the extended ECA instance, and then triggers the first action (the telemetry function) in the extended ECA instance, to send the corresponding telemetry data to the network management device. In this way, the extended ECA model implements automatic association between the network event in the network device and the telemetry function, so that the network device can automatically start the telemetry function and send the telemetry data based on the occurring network event. It should be understood that FIG. 1 shows an interaction process between the network management device and the network device A, and an interaction process between the network management device and the network device B and an interaction process between the network management device and the network device C may also be implemented in the foregoing implementations. In the foregoing implementations, the network device is used as a monitored object for description. It should be understood that a part of the network device (for example, one or more forwarding boards included in the network device, or the router and/or the host included in the network device) may alternatively be used as a monitored object in the foregoing implementations.

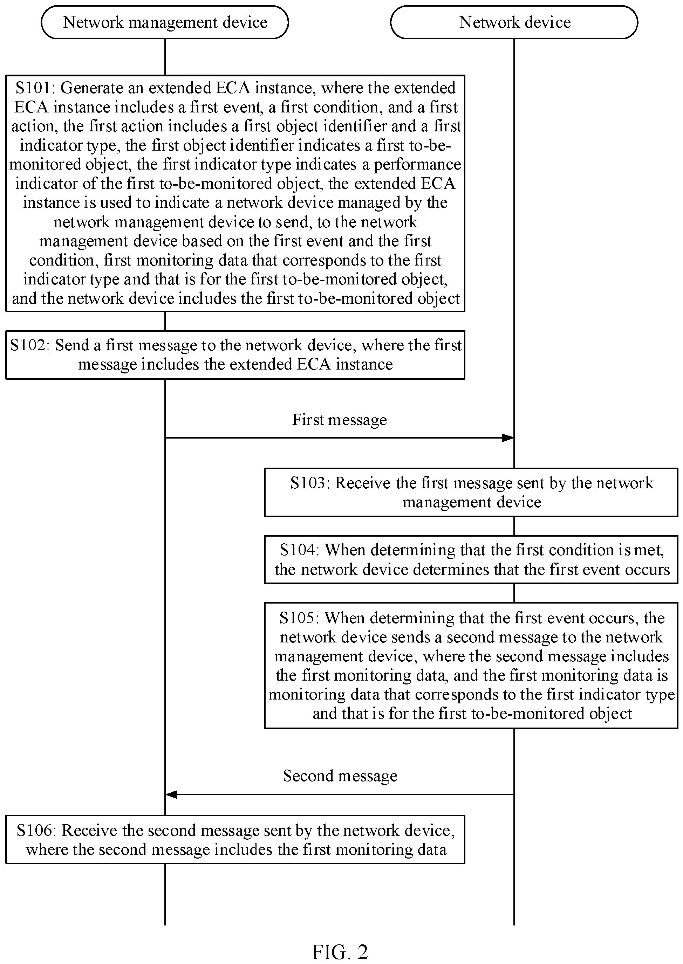

FIG. 2 is a flowchart of a data processing method according to an embodiment of this application. The method shown in FIG. 2 may be applied to the structure of the network shown in FIG. 1. In an implementation of this application, for ease of description, a "network management device" and a "network device" are used for description. It should be understood that the "network device" may be any one of the network device A, the network device B, and the network device C in FIG. 1. In this implementation of this application, unless otherwise specified, a first action is a telemetry function. Specifically, the method includes the following steps.

S101: A network management device generates an extended ECA instance, where the extended ECA instance includes a first event, a first condition, and a first action, the first action includes a first object identifier and a first indicator type, the first object identifier indicates a first to-be-monitored object, the first indicator type indicates a performance indicator of the first to-be-monitored object, the extended ECA instance is used to indicate a network device managed by the network management device to send, to the network management device based on the first event and the first condition, first monitoring data that corresponds to the first indicator type and that is for the first to-be-monitored object, and the network device includes the first to-be-monitored object.

Based on the foregoing implementation, in a possible implementation, the network management device may directly generate the extended ECA instance. The extended ECA instance includes the first event, the first condition, and the first action. The first event indicates a network event related to the network device. The first condition indicates a condition that can trigger occurrence of the network event. The first action indicates that a corresponding telemetry function is triggered when the event occurs. Therefore, the extended ECA instance indicates that when the first condition is met, occurrence of the first event is triggered, and the corresponding first action (the telemetry function) is triggered after the first event occurs.

**Table 1**

| Instance name | First event | First condition | First action |
|---|---|---|---|
| Extended ECA instance 1 | Report the packet loss rate to a network management device | Monitor a packet loss rate, where the packet loss rate is greater than a threshold | Send the packet loss rate that exceeds the threshold |
| Extended ECA instance 2 | Report the CPU usage to the network management device | Monitor CPU usage, where the CPU usage is greater than a threshold | Send the CPU usage that exceeds the threshold |
| Extended ECA instance 3 | Report the queue length to the network management device | Monitor a queue length, where the queue length is greater than a threshold | Send the queue length that exceeds the threshold |
| Extended ECA instance 4 | Report the delay to the network management device | Monitor a delay, where the delay is greater than a threshold | Send the delay that exceeds the threshold |
| Extended ECA instance 5 | Report the jitter value to the network management device | Monitor a jitter value, where the jitter value is greater than a threshold | Send the jitter value that exceeds the threshold |
| Extended ECA instance 6 | Report the bandwidth usage to the network management device | Monitor bandwidth usage, where the bandwidth usage is less than a threshold | Send the bandwidth usage that is less than the threshold |
| ... | ... | ... | ... |

Table 1 shows an example of description of extended ECA instances that are commonly used. In other words, Table 1 describes extended ECA instances in a manner of implementing a function. In an actual application scenario, the extended ECA instance may be implemented by using a plurality of protocols or computer languages. For example, the foregoing extended ECA instances are implemented in an XML manner. The following separately describes the extended ECA instances in Table 1.

The extended ECA instance 1 implements monitoring of a packet loss rate. Specifically, the network management device telemeters the network device to execute the extended ECA instance 1. The network device monitors a packet loss rate of the first to-be-monitored object, and when the packet loss rate is greater than a threshold (the first condition), triggers reporting of the packet loss rate to the network management device (the first event). The network device determines that the first event occurs, and triggers the telemetry function of sending the packet loss rate that exceeds the threshold to the network management device (the first action). The sent packet loss rate that exceeds the threshold belongs to telemetry data. In a possible implementation, the packet loss rate in the extended ECA instance 1 is a packet loss rate in a device. For example, the packet loss rate is a difference between a quantity of data packets in an egress port queue of the first to-be-monitored object and a quantity of data packets in an ingress port queue of the first to-be-monitored object. In another possible implementation, the packet loss rate in the extended ECA instance 1 is a packet loss rate of a link between devices. For example, the packet loss rate is a packet loss rate of a link between the first to-be-monitored object and a previous-hop network device of the first to-be-monitored object, where the first to-be-monitored object serves as a receive end of traffic. In this implementation of this application, the network device includes the first to-be-monitored object. In other words, the first to-be-monitored object may be the network device, or may be a component or a device included in the network device. For example, the first to-be-monitored object is a forwarding board in the network device, or a host included in the network device.

The extended ECA instance 2 implements monitoring of CPU usage. Specifically, the network management device telemeters the network device to execute the extended ECA instance 2. The network device monitors CPU usage of the first to-be-monitored object, and when the CPU usage is greater than a threshold (the first condition), triggers reporting of the CPU usage to the network management device (the first event). The network device determines that the first event occurs, and triggers the telemetry function of sending the CPU usage that exceeds the threshold to the network management device (the first action). The sent CPU usage that exceeds the threshold belongs to the telemetry data. The network device may include a plurality of CPUs. For example, the network device includes a plurality of forwarding boards, and each forwarding board includes a CPU. Therefore, the CPU usage in the extended ECA instance 2 may be usage of the central processing unit in the network device, CPU usage of the forwarding board included in the network device, or CPU usage of the host included in the network device.

The extended ECA instance 3 implements monitoring of a queue length. Specifically, the network management device telemeters the network device to execute the extended ECA instance 3. The network device monitors a queue length of the first to-be-monitored object, and when the queue length is greater than a threshold (the first condition), triggers reporting of the queue length to the network management device (the first event). The network device determines that the first event occurs, and triggers the telemetry function of sending the queue length that exceeds the threshold to the network management device (the first action). The queue length includes an egress port queue length or an ingress port queue length.

The extended ECA instance 4 implements monitoring of a delay. Specifically, the network management device telemeters the network device to execute the extended ECA instance 4. The network device monitors a delay of the first to-be-monitored object, and when the delay is greater than a threshold (the first condition), triggers reporting of the delay to the network management device (the first event). The network device determines that the first event occurs, and triggers the telemetry function of sending the delay that exceeds the threshold to the network management device (the first action). In a possible implementation, the delay in the extended ECA instance 4 is a delay of a link between devices. For example, the delay is a delay of a link between the first to-be-monitored object and a previous-hop network device of the first to-be-monitored object, where the first to-be-monitored object serves as a receive end of traffic. In another possible implementation, the delay in the extended ECA instance 4 is a processing delay in a device. For example, the delay is a delay from an ingress port queue of the first to-be-monitored object to an egress port queue of the first to-be-monitored object.

The extended ECA instance 5 implements monitoring of a jitter value. Specifically, the network management device telemeters the network device to execute the extended ECA instance 5. The network device monitors a jitter value of the first to-be-monitored object, and when the jitter value is greater than a threshold (the first condition), triggers reporting of the jitter value to the network management device (the first event). The network device determines that the first event occurs, and triggers the telemetry function of sending the jitter value that exceeds the threshold to the network management device (the first action). The jitter value in the extended ECA instance 5 is a delay between packets passing through the first to-be-monitored object. The jitter value can be used to monitor whether a plurality of packets that are in a data flow and that are sent sequentially are interrupted.

The extended ECA instance 6 implements monitoring of bandwidth usage. Specifically, the network management device telemeters the network device to execute the extended ECA instance 6. The network device monitors bandwidth usage of the first to-be-monitored object, and when the bandwidth usage is less than a threshold (the first condition), triggers reporting of the bandwidth usage to the network management device (the first event). The network device determines that the first event occurs, and triggers the telemetry function of sending the bandwidth usage that is less than the threshold to the network management device (the first action). The bandwidth usage in the extended ECA instance 5 is a ratio of a rate at which an egress port of the first to-be-monitored object sends traffic to a rated physical bandwidth of a link connected to the egress port.

In addition, the last row in Table 1 indicates that the extended ECA instances illustrated in Table 1 are not exhaustive. The network management device may generate another extended ECA instance.

Based on the foregoing implementations, in another possible implementation, the network management device may first obtain an extended ECA model before generating the extended ECA instance. The extended ECA model may include an event, a condition, and an action. The network management device may automatically generate the extended ECA model, or may receive the extended ECA model from another device. After generating the extended ECA model, the network management device may generate the extended ECA instance based on a specific telemetry indicator that needs to be monitored. For example, the network management device expects to generate the extended ECA instance 2, so that the network management device can monitor the CPU usage of the first to-be-monitored object. The network management device may, based on description of the extended ECA instance 2 in Table 1, add a related parameter of the first event in the extended ECA instance 2 to the event part in the extended ECA model, add a related parameter of the first condition in the extended ECA instance 2 to the condition part in the extended ECA model, and add a related parameter of the first action in the extended ECA instance 2 to the action part in the extended ECA model, to generate the extended ECA instance 2.

The first action in the extended ECA instance includes the first object identifier and the first indicator type. The first object identifier indicates the first to-be-monitored object. For example, the first to-be-monitored object is the network device, and the first object identifier may specifically be a device identifier of the network device. For another example, the first to-be-monitored object is a forwarding board included in the network device, and the first object identifier may specifically be a device identifier of the network device and an identifier of the forwarding board, or the first object identifier may specifically be a device identifier of the network device and a location identifier of the forwarding board in the network device. One extended ECA instance may include a plurality of first object identifiers. Specifically, the first action includes the first object identifier and the first indicator type, and further includes a second object identifier and a second indicator type. The second object identifier indicates a second to-be-monitored object, and the second indicator type indicates a performance indicator of the second to-be-monitored object. For example, the extended ECA instance 2 includes a device identifier of the network device A and a device identifier of the network device B, and both the first indicator type and the second indicator type are CPU usage. In this way, the network management device may monitor CPU usage of the network device A and the network device B by using the extended ECA instance 2. The first indicator type indicates the performance indicator of the first to -be-monitored object. For example, the network management device generates the extended ECA instance 1, a value of the first indicator type is 01, and 01 indicates the packet loss rate. The network management device generates the extended ECA instance 2, a value of the first indicator type is 02, and 02 indicates the CPU usage.

The extended ECA instance is used to indicate the network device managed by the network management device to send, to the network management device based on the first event and the first condition, the first monitoring data that corresponds to the first indicator type and that is for the first to-be-monitored object. The extended ECA instance may indicate the network device to execute the extended ECA instance, to trigger the telemetry function in the extended ECA instance and generate the corresponding telemetry data. It should be understood that this implementation of this application uses an example in which the telemetry data is used as the first monitoring data.

Optionally, the first action further includes a group identifier, and the group identifier indicates a service type associated with the extended ECA instance. When the network device includes traffic of a plurality of services, traffic of a specific service may be monitored by using the group identifier. For example, the network device A includes a 3-layer virtual private network (virtual private network, VPN) service and a multi-protocol label switching (multi-protocol label switching, MPLS) service. The network management device expects to monitor a packet loss rate of data traffic of the related MPLS service in the network device A. Therefore, the extended ECA instance 1 may include the group identifier, a value of the group identifier is 01, and 01 indicates that the extended ECA instance 1 is used to monitor the packet loss rate of the data traffic of the MPLS service.

Optionally, the first action further includes an enabling flag, and the enabling flag is used to enable the first action. When running the telemetry function, the network device needs to run a protocol related to the telemetry function. The network management device may periodically monitor the network device. For example, the network management device monitors, for 5 minutes, the network device at an interval of 1 hour. In this way, if the network device always maintains the telemetry function enabled, power consumption and CPU usage of the network device increase. Therefore, when running, the network device may maintain the telemetry function disabled. When receiving the extended ECA instance, the network device determines whether the first action includes the enabling flag. When determining that the first action includes the enabling flag, the network device enables a function of sending the telemetry data.

Optionally, the first action further includes a first operation type, and the first operation type indicates an attribute of the first monitoring data. The attribute of the first monitoring data may include at least one of the following: an average value, a maximum value, a minimum value, and a variance value. For example, the network management device wants to monitor an average value of the CPU usage of the network device. The network management device may add a first operation type field to the extended ECA instance 2, and set a value of the first operation type field to an average value. In a process of running the extended ECA instance 2, the network device monitors, within a preset period, CPU usage that is greater than the threshold, obtains an average value, and then sends the average value to the network management device.

Optionally, the first action further includes a first indicator value type, and the first indicator value type indicates a data type of the first monitoring data. Specifically, the first indicator value type indicates a value type of the telemetry data when the network device reports the telemetry data. For example, unit 32 indicates a 32-bit unsigned integer.

With reference to the foregoing description, when one extended ECA instance includes a plurality of to-be-monitored objects, optionally, the first action further includes a first object identifier list. The first object identifier list includes a plurality of object identifiers. For example, the first object identifier list includes the first object identifier and the second object identifier.

The following describe implementation of the action in the extended ECA model and the first action in the extended ECA model by using a specific implementation as an example.

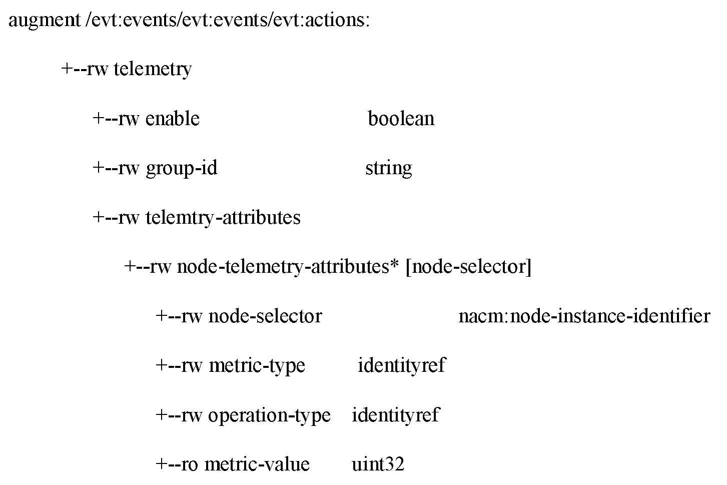

The foregoing command lines show the specific implementation of the action in the extended ECA model in this implementation of this application. "rw telemetry" indicates that the action is a telemetry function, "rw enable" indicates the enabling flag in the foregoing implementation, and when a value is "enable", the network device is indicated to start the function of sending the telemetry data to the network management device. "rw group-id" indicates the group identifier in the foregoing implementation. "rw telemtry-attributes" indicates that the command line following this line describes an attribute function. "rw node-telemetry-attributes* [node-selector]" indicates the first object identifier list in the foregoing implementation. "rw node-selector" indicates the first object identifier or the second object identifier in the foregoing implementation. "rw metric-type" indicates the first indicator type or the second indicator type in the foregoing implementation. "rw operation-type" indicates the first operation type in the foregoing implementation. "ro metric-value" indicates the first indicator value type in the foregoing implementation.

Based on the foregoing description, the network management device may generate the extended ECA instance based on the extended ECA model. Specifically, the network management device adds a specific related parameter to the extended ECA model, to generate the corresponding extended ECA instance. For example, for the specific implementation of the action part in the extended ECA model, the network management device expects to generate the extended ECA instance 2, to monitor the CPU usage of the network device A. In this case, the network management device adds the identifier of the network device A to "rw node-telemetry-attributes* [node-selector]", adds the identifier of the network device A to "rw node-selector", and adds an identifier indicating the CPU usage to "rw metric-type". Correspondingly, the network management device further sets a specific value of the parameter of the action part based on a monitoring requirement, to form the first action part in the extended ECA instance 2. It is clear that the network management device also needs to correspondingly generate the first event and the first condition part in the extended ECA instance 2 in a similar manner. Details are not described herein.

Based on the foregoing description, when the one extended ECA instance includes the plurality of to-be-monitored objects, for example, the extended ECA instance 2 is applied to monitoring the CPU usage of the network device A and the CPU usage of the network device B. In this case, the network management device adds the identifier of the network device A and the identifier of the network device B to "rw node-telemetry-attributes* [node-selector]". For "rw node-selector", "rw metric-type", "rw operation-type", and "ro metric-value", the generated extended ECA instance 2 includes two groups of parameters. For example, "rw node-selector-1", "rw metric-type-1", "rw operation-type-1", and "ro metric-value-1" are related parameters of the network device A, and "rw node-selector-2", "rw metric-type-1", "rw operation-type-2", and "ro metric-value-2" are related parameters of the network device B.

With reference to the foregoing description, in this implementation of this application, the first indicator type may indicate performance indicators, for example, the packet loss rate, the CPU usage, the queue length, the delay, the jitter value, and the bandwidth usage, that are of corresponding data and that can be obtained through measurement. The first indicator type may also indicate a performance indicator, for example, configuration information of the first to-be-monitored object, that is of corresponding data and that does not need to be obtained through measurement.

S102: The network management device sends a first message to the network device, where the first message includes the extended ECA instance.

S103: The network device receives the first message sent by the network management device.

The network management device generates the extended ECA instance, and sends the first message to the network device, where the first message includes the extended ECA instance. Optionally, the message transferred between the network management device and the network device may be implemented based on a NETCONF or a RESTCONF. In other words, the first message includes a NETCONF message or a RESTCONF message.

Optionally, before sending the first message to the network device, the network management device establishes a NETCONF session or a RESTCONF session between the network management device and the network device. For example, the network management device establishes the NETCONF session between the network management device and the network device. The network management device sends a NETCONF session request message to the network device. After receiving the NETCONF session request message, the network device determines that the NETCONF session can be established with the network management device. The network device sends a NETCONF session confirmation message to the network management device. After receiving the NETCONF session confirmation message, the network management device determines that the NETCONF session is established. Aprocess of establishing the RESTCONF session is similar to a process of establishing the NETCONF session. Details are not described herein.

The network device receives the first message sent by the network management device. Then, the network device obtains the extended ECA instance in the first message.

S104: When determining that the first condition is met, the network device determines that the first event occurs.

S105: When determining that the first event occurs, the network device sends a second message to the network management device, where the second message includes the first monitoring data, and the first monitoring data is monitoring data that corresponds to the first indicator type and that is for the first to-be-monitored object.

S106: The network management device receives the second message sent by the network device.

For example, the extended ECA instance sent by the network management device to the network device is the extended ECA instance 2, and the to-be-monitored object monitored by the network management device is the network device A. The network device A runs the extended ECA instance 2. The network device A monitors the CPU usage of the network device A based on the first condition part in the extended ECA instance 2. Then, the network device A compares a value of the monitored CPU usage with the threshold. The network device A determines that the value of the monitored CPU usage is greater than the threshold, and determines that the first condition in the extended ECA instance 2 is met. Then, the network device A triggers occurrence of the first event (reporting of the CPU usage to the network management device) in the extended ECA instance 2. When determining that the first event in the extended ECA instance 2 occurs, the network device A executes the first action in the extended ECA instance 2. Optionally, the network device A finds that the enabling flag included in the first action in the extended ECA instance 2 is in an enable state, and enables the function of sending the telemetry data to the network management device. The network device A determines the final first monitoring data (the value of the CPU usage), namely, the telemetry data, based on parameters in fields included in the first action in the ECA instance 2.

After determining the first monitoring data, the network device generates the second message. Based on the foregoing description, the second message includes the NETCONF message or the RESTCONF message. The following describes an implementation of the second message by using a specific implementation as an example.

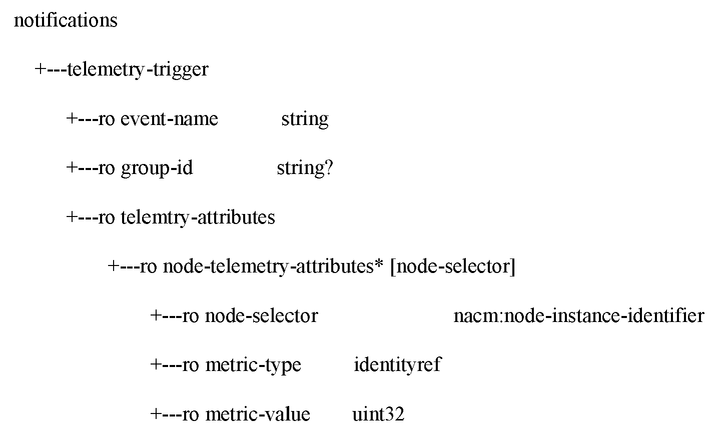

"telemetry-trigger" indicates that the second message is triggered by the telemetry function. "ro event-name" indicates a first event identifier associated with the second message, and corresponds to a first event identifier in the extended ECA instance executed by the network device. "ro group-id" indicates a group identifier corresponding to the sent telemetry data, and corresponds to the group identifier in the extended ECA instance executed by the network device. "ro node-telemetry-attributes* [node-selector]" indicates a first object identifier list corresponding to the sent telemetry data, and corresponds to "re node-telemetry-attributes* [node-selector]" in the extended ECA instance executed by the network device. "ro node-selector" indicates the first object identifier or the second object identifier in the foregoing implementation, and corresponds to "re node-selector" in the extended ECA instance executed by the network device. "ro metric-type" indicates the first indicator type or the second indicator type in the foregoing implementation, and corresponds to "rw metric -type" in the extended ECA instance executed by the network device. "ro metric-value" includes the first monitoring data.

When the network device needs to send monitoring data of a plurality of to-be-monitored objects to the network management device, the network device may generate a plurality of second messages, and separately send the plurality of second messages to the network management device; or generate one second message carrying the monitoring data of the plurality of to-be-monitored objects. For an implementation in which one second message carries the monitoring data of the plurality of to-be-monitored objects, refer to description in the foregoing implementation.

After generating the second message, the network device sends the second message to the network management device. Correspondingly, the network management device receives the second message sent by the network device.

In a possible implementation, the network device sends the second message to the network management device based on a preset period. For example, the network device sends the second message to the network management device at an interval of 5 minutes.

In another possible implementation, the network device may send the second message based on a request message of the network management device. For example, the network management device sends the request message to the network device, where the request message is used to request the network device to send the second message. The second message may include the NETCONF message or the RESTCONF message. The network device sends the second message to the network management device based on the request message. Optionally, the network management device sends the request message to the network device based on a preset period (or at a preset frequency). For example, the network management device sends the request message to the network device at an interval of 5 minutes.

With reference to the foregoing implementations, the first condition is a condition, met by the first to-be-monitored object, of the performance indicator indicated by the first indicator type. Refer to the extended ECA instance 2 in Table 1. In the first action in the extended ECA instance 2, the value of the first indicator type is 02, and 02 indicates that the performance indicator indicated by the first indicator type is the CPU usage. The first condition in the extended ECA instance 2 is associated with the CPU usage, that is, the set condition is a condition related to the CPU usage. It can be seen from an extended ECA instance 7 that a performance indicator (CPU usage) set in a first condition is the same as a performance indicator (CPU usage) set in a first action.

In another possible implementation, the first condition is a condition, met by the first to-be-monitored object, of a performance indicator indicated by a third indicator type, and the third indicator type is different from the first indicator type. For example, a first event in the extended ECA instance 7 (not shown in Table 1) is "reporting of ARP statistics to the network management device (ARP means an address resolution protocol (Address Resolution Protocol))", the first condition is "monitoring of the CPU usage, where the CPU usage is greater than a threshold", and the first action is "sending of a quantity of ARP packets received by a to-be-monitored object within a preset period". Specific implementation of "sending of the quantity of ARP packets received by the to-be-monitored object within the preset period" may be: After the first event occurs, timing is enabled, and the network device monitors, until the preset period ends, the quantity of ARP packets received by the to-be-monitored object within the preset period, and then sends the quantity of ARP packets to the network management device. The extended ECA instance 7 may be applied to ARP packet attack monitoring. It can be seen from the extended ECA instance 7 that the performance indicator (the CPU usage) set in the first condition is different from the performance indicator (the quantity of ARP packets) set in the first action.

Based on the foregoing implementations, the network management device generates the extended ECA instance, and sends the extended ECA instance to the network device. When determining that the first condition in the extended ECA instance is met, the network device triggers occurrence of the first event in the extended ECA instance, and then triggers the first action (the telemetry function) in the extended ECA instance, to send the corresponding telemetry data to the network management device. In this way, the extended ECA model implements automatic association between the network event in the network device and the telemetry function, so that the network device can automatically start the telemetry function and send the telemetry data based on the occurring network event.

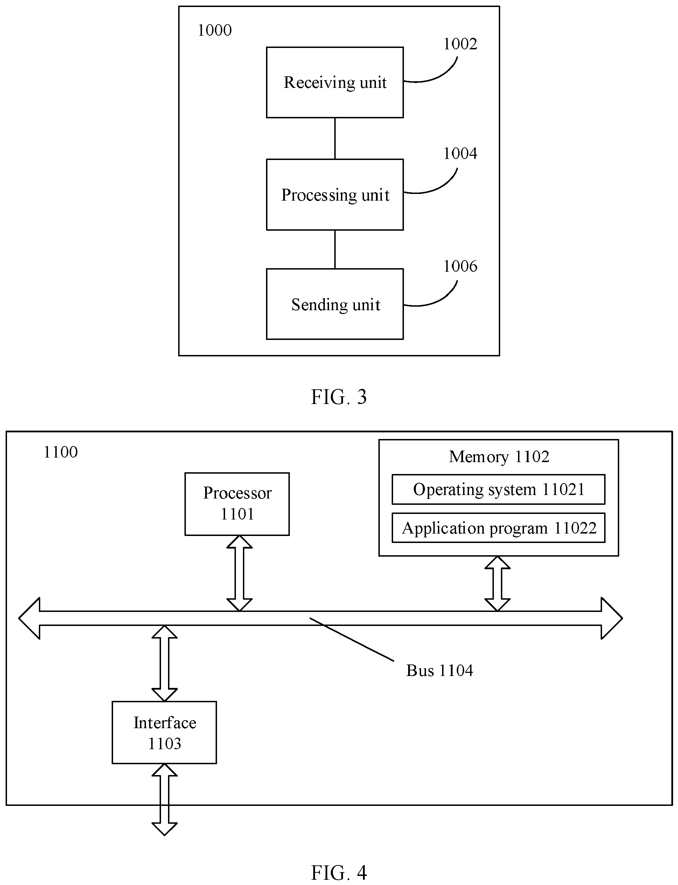

FIG. 3 is a schematic diagram of a structure of a network management device 1000 according to an embodiment of this application. The network management device 1000 shown in FIG. 3 may perform corresponding steps performed by the network management device in the method in the foregoing embodiment. The network management device is deployed in a communication network, and the communication network further includes a network device. As shown in FIG. 3, the network management device 1000 includes a receiving unit 1002, a processing unit 1004, and a sending unit 1006.

The processing unit 1004 is configured to generate an ECA instance, where the extended ECA instance includes a first event, a first condition, and a first action, the first action includes a first object identifier and a first indicator type, the first object identifier indicates a first to-be-monitored object, the first indicator type indicates a performance indicator of the first to-be-monitored object, the extended ECA instance is used to indicate the network device managed by the network management device to send, to the network management device based on the first event and the first condition, first monitoring data that corresponds to the first indicator type and that is for the first to-be-monitored object, and the network device includes the first to-be-monitored object.

The sending unit 1006 is configured to send a first message to the network device, where the first message includes the extended ECA instance.

The receiving unit 1002 is configured to receive a second message sent by the network device, where the second message includes the first monitoring data.

Optionally, the first condition is a condition, met by the first to-be-monitored object, of the performance indicator indicated by the first indicator type.

Optionally, the first condition is a condition, met by the first to-be-monitored object, of a performance indicator indicated by a third indicator type, and the third indicator type is different from the first indicator type.

Optionally, before the receiving unit 1002 receives the second message sent by the network device, the sending unit 1006 is further configured to send a request message to the network device, where the request message is used to request the network device to send the second message.

Optionally, when sending the request message to the network device, the sending unit 1006 is specifically configured to send the request message to the network device at a preset frequency.

Optionally, before generating the ECA instance, the processing unit 1004 is further configured to obtain an extended ECA model, where the extended ECA model indicates the processing unit 1004 to generate the extended ECA instance based on the extended ECA model and an event that needs to be monitored.

Optionally, the first action further includes a second object identifier and a second indicator type, the second object identifier indicates a second to-be-monitored object, the second indicator type indicates a performance indicator of the second to-be-monitored object, the extended ECA instance is further used to indicate the network device to send, to the network management device based on the first event and the first condition, second monitoring data that corresponds to the second indicator type and that is for the second to-be-monitored object, the network device includes the second to-be-monitored object, and the second message further includes the second monitoring data.

Optionally, the first action further includes a group identifier, and the group identifier indicates a service type associated with the extended ECA instance.

Optionally, the first action further includes an enabling flag, and the enabling flag is used to enable the first action.

Optionally, the first action further includes a first operation type and/or a first indicator value type, the first operation type indicates an attribute of the first monitoring data, and the first indicator value type indicates a data type of the first monitoring data.

Optionally, before the sending unit 1006 sends the first message to the network device, the processing unit 1004 is further configured to establish a network configuration protocol NETCONF session or a RESTCONF session between the network management device and the network device.

The network management device shown in FIG. 3 may perform corresponding steps performed by the network management device in the method in the foregoing embodiment. The network management device sends the extended ECA instance to the network device, and an action part included in the extended ECA instance may trigger a telemetry function of the network device. Therefore, the network device may trigger the telemetry function based on an event part included in the extended ECA instance, and send corresponding telemetry data to the network management device. Therefore, automatic association between a network event and telemetry is implemented based on the extended ECA model.

FIG. 4 is a schematic diagram of a hardware structure of a network management device 1100 according to an embodiment of this application. The network management device 1100 shown in FIG. 4 may perform corresponding steps performed by the network management device in the method in the foregoing embodiment.

As shown in FIG. 4, the network management device 1100 includes a processor 1101, a memory 1102, an interface 1103, and a bus 1104. The interface 1103 may be implemented in a wireless or wired manner, and may specifically be a network adapter. The processor 1101, the memory 1102, and the interface 1103 are connected through the bus 1104.

The interface 1103 may specifically include a transmitter and a receiver, and is used for receiving and sending of information between the network management device and the network device in the foregoing embodiment. For example, the interface 1103 is configured to support receiving of a second message sent by the network device, or configured to support sending of a first message. For example, the interface 1103 is configured to support S102 and S106 in FIG. 2. The processor 1101 is configured to perform processing performed by the network management device in the foregoing embodiment. For example, the processor 1101 is configured to generate an extended ECA instance, and/or another process of the technology described in this specification. For example, the processor 1101 is configured to support S101 in FIG. 2. The memory 1102 includes an operating system 11021 and an application program 11022, and is configured to store a program, code, or instructions. When executing the program, the code, or the instructions, the processor or a hardware device may complete a processing process related to the network management device in the method embodiments. Optionally, the memory 1102 may include a read-only memory (English: Read-only Memory, ROM for short) and a random access memory (English: Random Access Memory, RAM for short). The ROM includes a basic input/output system (English: Basic Input/Output System, BIOS for short) or an embedded system. The RAM includes an application program and an operating system. When the network management device 1100 needs to run, the BIOS cured in the ROM or a bootloader system in an embedded system is used for startup, so that the network management device 1100 enters a normal running state. After the network management device 1100 enters the normal running state, the application program and the operating system run in the RAM, to enable the processing process related to the network management device in the method embodiments.

It may be understood that FIG. 4 shows merely a simplified design of the network management device 1100. During actual application, the network management device may include any quantity of interfaces, processors, or memories.

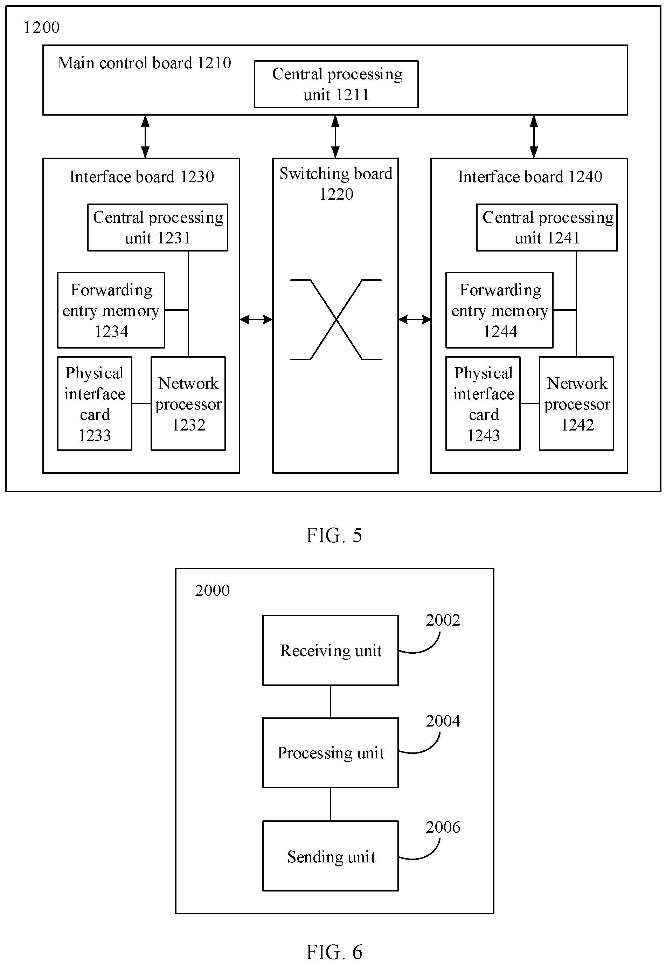

FIG. 5 is a schematic diagram of a hardware structure of another network management device 1200 according to an embodiment of this application. The network management device 1200 shown in FIG. 5 may perform corresponding steps performed by the network management device in the method in the foregoing embodiment.

As shown in FIG. 5, the network management device 1200 includes a main control board 1210, an interface board 1230, a switching board 1220, and an interface board 1240. The main control board 1210, the interface boards 1230 and 1240, and the switching board 1220 are connected to a system backboard through a system bus for communication. The main control board 1210 is configured to complete functions such as system management, device maintenance, and protocol processing. The switching board 1220 is configured to exchange data between interface boards (the interface board is also referred to as a line card or a service board). The interface boards 1230 and 1240 are configured to provide various service interfaces (for example, a POS interface, a GE interface, and an ATM interface), and forward a data packet.

The interface board 1230 may include a central processing unit 1231, a forwarding entry memory 1234, a physical interface card 1233, and a network processor 1232. The central processing unit 1231 is configured to control and manage the interface board, and communicate with a central processing unit on the main control board. The forwarding entry memory 1234 is configured to store a forwarding entry. The physical interface card 1233 is configured to receive and send traffic. The network memory 1232 is configured to control, based on the forwarding entry, the physical interface card 1233 to receive and send the traffic.

Specifically, the physical interface card 1233 is configured to receive a second message sent by the network device. The physical interface card 1233 is further configured to send a first message to the network device.

After receiving the second message, the physical interface card 1233 sends the second message to a central processing unit 1211 by using the central processing unit 1231, and the central processing unit 1211 processes the second message.

The central processing unit 1211 is further configured to generate an extended ECA instance.

The central processing unit 1231 is further configured to control the network memory 1232 to obtain a forwarding entry in the forwarding entry memory 1234, and the central processing unit 1231 is further configured to control the network memory 1232 to send the first message to the network device by using the physical interface card 1233.

It should be understood that operations on the interface board 1240 are the same as the operations on the interface board 1230 in this embodiment of the present invention. For brevity, details are not described again. It should be understood that the network management device 1200 in this embodiment may correspond to functions and/or various steps implemented in the foregoing method embodiments, and details are not described herein again.

In addition, it should be noted that there may be one or more main control boards, and when there are a plurality of main control boards, the main control boards may include an active main control board and a standby main control board. There may be one or more interface boards. A network management device with a stronger data processing capability provides more interface boards. There may also be one or more physical interface cards on the interface board. There may be no switching board or one or more switching boards. When there are a plurality of switching boards, load sharing and redundancy backup may be implemented together. In a centralized forwarding architecture, the network management device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network management device in the distributed architecture is better than that of the device in the centralized architecture. A specific architecture that is to be used depends on a specific networking deployment scenario. This is not limited herein.

In addition, an embodiment of this application provides a computer storage medium, configured to store computer software instructions that are used by the foregoing network management device and that include a program designed for executing the foregoing method embodiments.

FIG. 6 is a schematic diagram of a structure of a network device 2000 according to an embodiment of this application. The network device 2000 shown in FIG. 6 may perform corresponding steps performed by the network device in the method in the foregoing embodiment. The network device is deployed in a communication network, and the communication network further includes a network management device. As shown in FIG. 6, the network device 2000 includes a receiving unit 2002, a processing unit 2004, and a sending unit 2006.

The receiving unit 2002 is configured to receive a first message sent by the network management device, where the first message includes an extended ECA instance, the extended ECA instance includes a first event, a first condition, and a first action, the first action includes a first object identifier and a first indicator type, the first object identifier indicates a first to-be-monitored object, the first indicator type indicates a performance indicator of the first to-be-monitored object, and the network device includes the first to-be-monitored object.

The processing unit 2004 is configured to: when determining that the first condition is met, determine that the first event occurs.

The sending unit 2006 is configured to: when the processing unit 2004 determines that the first event occurs, send a second message to the network management device, where the second message includes first monitoring data, and the first monitoring data is monitoring data that corresponds to the first indicator type and that is for the first to-be-monitored object.

Optionally, the first condition is a condition, met by the first to-be-monitored object, of the performance indicator indicated by the first indicator type.

Optionally, the first condition is a condition, met by the first to-be-monitored object, of a performance indicator indicated by a third indicator type, and the third indicator type is different from the first indicator type.

Optionally, before the sending unit 2006 sends the second message to the network management device, the receiving unit 2002 is further configured to receive a request message sent by the network management device, where the request message is used to request the network device to send the second message.

Optionally, the first action further includes a second object identifier and a second indicator type, the second object identifier indicates a second to-be-monitored object, the second indicator type indicates a performance indicator of the second to-be-monitored object, the network device includes the second to-be-monitored object, the second message further includes the second monitoring data, and the second monitoring data is monitoring data that corresponds to the second indicator type and that is for the second to-be-monitored object.

Optionally, the first action further includes a group identifier, the group identifier indicates a service type associated with the extended ECA instance, and the first monitoring data is monitoring data associated with the service type.

Optionally, the first action further includes an enabling flag, the enabling flag is used to enable the first action, and before determining that the first condition is met, the processing unit 2004 is further configured to enable, based on the enabling flag, a function of sending the monitoring data, where the monitoring data is associated with running of the first action.

Optionally, the second message further includes the group identifier, and the group identifier indicates a service type associated with the extended ECA instance.

Optionally, the second message further includes an event identifier, and the event identifier indicates the first event.

Optionally, the second message further includes the first object identifier and the first indicator type.

The network device shown in FIG. 6 may perform corresponding steps performed by the network device in the method in the foregoing embodiment. The network management device sends the extended ECA instance to the network device, and an action part included in the extended ECA instance may trigger a telemetry function of the network device. Therefore, the network device may trigger the telemetry function based on an event part included in the extended ECA instance, and send corresponding telemetry data to the network management device. Therefore, automatic association between a network event and telemetry is implemented based on an extended ECA model.

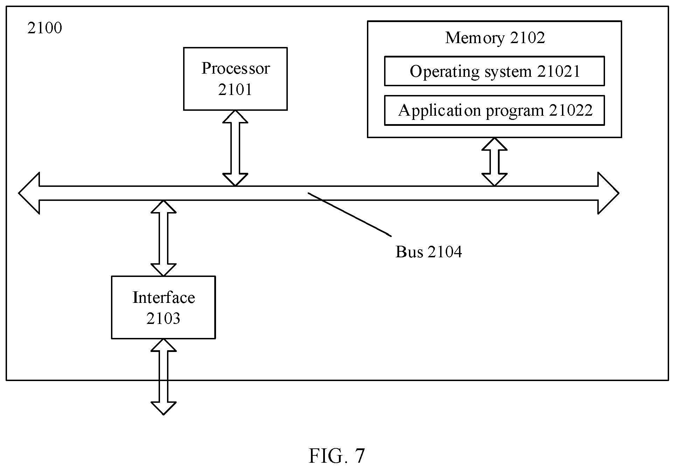

FIG. 7 is a schematic diagram of a hardware structure of a network device 2100 according to an embodiment of this application. The network device 2100 shown in FIG. 7 may perform corresponding steps performed by the network device in the method in the foregoing embodiment.

As shown in FIG. 7, the network device 2100 includes a processor 2101, a memory 2102, an interface 2103, and a bus 2104. The interface 2103 may be implemented in a wireless or wired manner, and may specifically be a network adapter. The processor 2101, the memory 2102, and the interface 2103 are connected through the bus 2104.

The interface 2103 may specifically include a transmitter and a receiver, and is used for receiving and sending of information or data between the network device and the network management device in the foregoing embodiment. For example, the interface 2103 is configured to support sending of a second message to the network management device. For another example, the interface 2103 is configured to support receiving of a first message sent by the network management device. For example, the interface 2103 is configured to support S103 and S105 in FIG. 2. The processor 2101 is configured to perform processing performed by the network device in the foregoing embodiment. For example, the processor 2101 is configured to generate a second message and execute an extended ECA instance, and/or another process of the technology described in this specification. For example, the processor 2101 is configured to support S104 in FIG. 2. The memory 2102 includes an operating system 21021 and an application program 21022, and is configured to store a program, code, or instructions. When executing the program, the code, or the instructions, the processor or a hardware device may complete a processing process related to the network device in the method embodiments. Optionally, the memory 2102 may include a read-only memory (English: Read-only Memory, ROM for short) and a random access memory (English: Random Access Memory, RAM for short). The ROM includes a basic input/output system (English: Basic Input/Output System, BIOS for short) or an embedded system. The RAM includes an application program and an operating system. When the network device 2100 needs to run, the BIOS cured in the ROM or a bootloader system in an embedded system is used for startup, so that the network device 2100 enters a normal running state. After the network device 2100 enters the normal running state, the application program and the operating system run in the RAM, to enable the processing process related to the network device in the method embodiments.

It may be understood that FIG. 7 shows merely a simplified design of the network device 2100. During actual application, the network device may include any quantity of interfaces, processors, or memories.

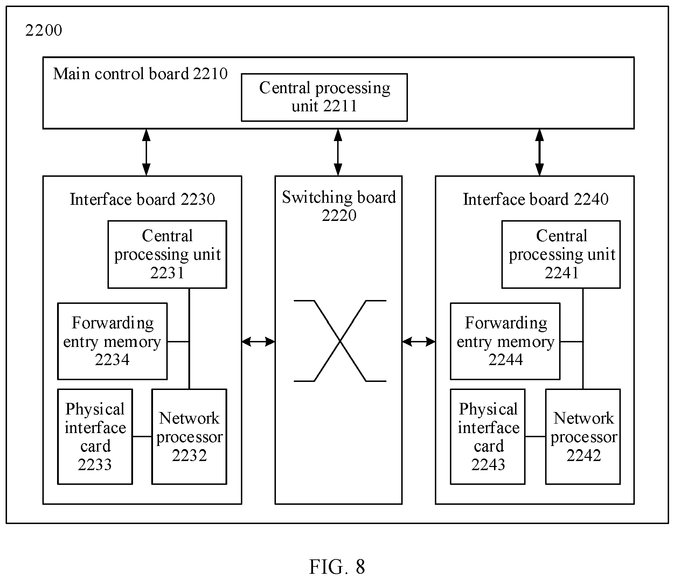

FIG. 8 is a schematic diagram of a hardware structure of another network device 2200 according to an embodiment of this application. The network device 2200 shown in FIG. 8 may perform corresponding steps performed by the network device in the method in the foregoing embodiment.

As shown in FIG. 8, the network device 2200 includes a main control board 2210, an interface board 2230, a switching board 2220, and an interface board 2240. The main control board 2210, the interface boards 2230 and 2240, and the switching board 2220 are connected to a system backboard through a system bus for communication. The main control board 2210 is configured to complete functions such as system management, device maintenance, and protocol processing. The switching board 2220 is configured to exchange data between interface boards (the interface board is also referred to as a line card or a service board). The interface boards 2230 and 2240 are configured to provide various service interfaces (for example, a POS interface, a GE interface, and an ATM interface), and forward a data packet.

The interface board 2230 may include a central processing unit 2231, a forwarding entry memory 2234, a physical interface card 2233, and a network processor 2232. The central processing unit 2231 is configured to control and manage the interface board, and communicate with a central processing unit on the main control board. The forwarding entry memory 2234 is configured to store a forwarding entry. The physical interface card 2233 is configured to receive and send traffic. The network memory 2232 is configured to control, based on the forwarding entry, the physical interface card 2233 to receive and send the traffic.

Specifically, the physical interface card 2233 is configured to send a second message to the network management device. The physical interface card 2233 is further configured to receive a first message sent by the network management device.

After receiving the first message sent by the network management device, the physical interface card 2233 sends the first message to a central processing unit 2211 by using the central processing unit 2231, and the central processing unit 2211 processes the first message.

The central processing unit 2211 is further configured to generate the second message and execute an extended ECA instance.

The central processing unit 2231 is further configured to control the network memory 2232 to obtain the forwarding entry in the forwarding entry memory 2234, and the central processing unit 2231 is further configured to control the network memory 2232 to receive and send the traffic by using the physical interface card 2233.

It should be understood that operations on the interface board 2240 are the same as the operations on the interface board 2230 in this embodiment of the present invention. For brevity, details are not described again. It should be understood that the network device 2200 in this embodiment may correspond to functions and/or various steps implemented in the foregoing method embodiments, and details are not described herein again.

In addition, it should be noted that there may be one or more main control boards, and when there are a plurality of main control boards, the main control boards may include an active main control board and a standby main control board. There may be one or more interface boards. A network device with a stronger data processing capability provides more interface boards. There may also be one or more physical interface cards on the interface board. There may be no switching board or one or more switching boards. When there are a plurality of switching boards, load sharing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. A specific architecture that is to be used depends on a specific networking deployment scenario. This is not limited herein.

In addition, an embodiment of this application provides a computer storage medium, configured to store computer software instructions that are used by the foregoing network device and that include a program designed for executing the foregoing method embodiments.

An embodiment of this application further includes a network system. The network system includes a network management device and a network device, the network management device is the network management device in FIG. 3, FIG. 4, or FIG. 5, and the network device is the network device in FIG. 6, FIG. 7, or FIG. 8.

The method or algorithm steps described with reference to the content disclosed in this application may be implemented by hardware, or may be implemented by a processor by executing software instructions. The software instructions may include a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. It is clear that the storage medium may be a component of the processor. The processor and the storage medium may be located in an ASIC. In addition, the ASIC may be located in user equipment. It is clear that the processor and the storage medium may alternatively exist in the user equipment as discrete components.

A person skilled in the art should be aware that in the foregoing one or more examples, functions described in this application may be implemented by hardware or software. When the present invention is implemented by software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a general-purpose computer or a special-purpose computer.

The objectives, technical solutions, and beneficial effects of this application are further described in detail in the foregoing specific implementations. It should be understood that the foregoing description is merely a specific implementation of this application.

## Claims

1. A data processing method, wherein the method comprises:
generating, by a network management device, an extended event-condition-action ECA instance, wherein the extended ECA instance comprises a first event, a first condition, and a first action, the first action comprises a first object identifier and a first indicator type, the first object identifier indicates a first to-be-monitored object, the first indicator type indicates a performance indicator of the first to-be-monitored object, the extended ECA instance is used to indicate a network device managed by the network management device to send, to the network management device based on the first event and the first condition, first monitoring data that corresponds to the first indicator type and that is for the first to-be-monitored object, and the network device comprises the first to-be-monitored object;
sending, by the network management device, a first message to the network device, wherein the first message comprises the extended ECA instance; and
receiving, by the network management device, a second message sent by the network device, wherein the second message comprises the first monitoring data.

2. The method according to claim 1, wherein the first condition is a condition, met by the first to-be-monitored object, of the performance indicator indicated by the first indicator type.

3. The method according to claim 1, wherein the first condition is a condition, met by the first to-be-monitored object, of a performance indicator indicated by a third indicator type, and the third indicator type is different from the first indicator type.

4. The method according to any one of claims 1 to 3, wherein before the receiving, by the network management device, a second message sent by the network device, the method further comprises:
sending, by the network management device, a request message to the network device, wherein the request message is used to request the network device to send the second message.

5. The method according to claim 4, wherein the sending, by the network management device, a request message to the network device comprises:
sending, by the network management device, the request message to the network device at a preset frequency.

6. The method according to any one of claims 1 to 5, wherein before the generating, by a network management device, an extended event-condition-action ECA instance, the method further comprises:
obtaining, by the network management device, an extended ECA model, wherein the extended ECA model indicates the network management device to generate the extended ECA instance based on the extended ECA model and an event that needs to be monitored.

7. The method according to any one of claims 1 to 6, wherein the first action further comprises a second object identifier and a second indicator type, the second object identifier indicates a second to-be-monitored object, the second indicator type indicates a performance indicator of the second to-be-monitored object, the extended ECA instance is further used to indicate the network device to send, to the network management device based on the first event and the first condition, second monitoring data that corresponds to the second indicator type and that is for the second to-be-monitored object, and the network device comprises the second to-be-monitored object; and
the second message further comprises the second monitoring data.

8. The method according to any one of claims 1 to 7, wherein the first action further comprises a group identifier, and the group identifier indicates a service type associated with the extended ECA instance.

9. The method according to any one of claims 1 to 8, wherein the first action further comprises an enabling flag, and the enabling flag is used to enable the first action.

10. The method according to any one of claims 1 to 9, wherein the first action further comprises a first operation type and/or a first indicator value type, the first operation type indicates an attribute of the first monitoring data, and the first indicator value type indicates a data type of the first monitoring data.

11. The method according to any one of claims 1 to 10, wherein before the sending, by the network management device, a first message to the network device, the method further comprises:
establishing, by the network management device, a network configuration protocol NETCONF session or a RESTCONF session between the network management device and the network device.

12. A data processing method, wherein the method comprises:
receiving, by a network device, a first message sent by a network management device, wherein the first message comprises an extended event-condition-action ECA instance, the extended ECA instance comprises a first event, a first condition, and a first action, the first action comprises a first object identifier and a first indicator type, the first object identifier indicates a first to-be-monitored object, the first indicator type indicates a performance indicator of the first to-be-monitored object, and the network device comprises the first to-be-monitored object;
when determining that the first condition is met, determining, by the network device, that the first event occurs; and
when determining that the first event occurs, sending, by the network device, a second message to the network management device, wherein the second message comprises first monitoring data, and the first monitoring data is monitoring data that corresponds to the first indicator type and that is for the first to-be-monitored object.

13. The method according to claim 12, wherein the first condition is a condition, met by the first to-be-monitored object, of the performance indicator indicated by the first indicator type.

14. The method according to claim 12, wherein the first condition is a condition, met by the first to-be-monitored object, of a performance indicator indicated by a third indicator type, and the third indicator type is different from the first indicator type.

15. The method according to any one of claims 12 to 14, wherein before the sending, by the network device, a second message to the network management device, the method further comprises:
receiving, by the network device, a request message sent by the network management device, wherein the request message is used to request the network device to send the second message.

16. The method according to any one of claims 12 to 15, wherein the first action further comprises a second object identifier and a second indicator type, the second object identifier indicates a second to-be-monitored object, the second indicator type indicates a performance indicator of the second to-be-monitored object, the network device comprises the second to-be-monitored object, the second message further comprises the second monitoring data, and the second monitoring data is monitoring data that corresponds to the second indicator type and that is for the second to-be-monitored object.

17. The method according to any one of claims 12 to 16, wherein the first action further comprises a group identifier, the group identifier indicates a service type associated with the extended ECA instance, and the first monitoring data is monitoring data associated with the service type.

18. The method according to any one of claims 12 to 17, wherein the first action further comprises an enabling flag, the enabling flag is used to enable the first action, and before the network device determines that the first condition is met, the method further comprises:
enabling, by the network device based on the enabling flag, a function of sending the monitoring data, wherein the monitoring data is associated with running of the first action.

19. The method according to any one of claims 12 to 18, wherein the second message further comprises the group identifier, and the group identifier indicates a service type associated with the extended ECA instance.

20. The method according to any one of claims 12 to 19, wherein the second message further comprises an event identifier, and the event identifier indicates the first event.

21. The method according to any one of claims 12 to 20, wherein the second message further comprises the first object identifier and the first indicator type.

22. A network management device, wherein the network management device comprises:
a processing unit, configured to generate an extended event-condition-action ECA instance, wherein the extended ECA instance comprises a first event, a first condition, and a first action, the first action comprises a first object identifier and a first indicator type, the first object identifier indicates a first to-be-monitored object, the first indicator type indicates a performance indicator of the first to-be-monitored object, the extended ECA instance is used to indicate a network device managed by the network management device to send, to the network management device based on the first event and the first condition, first monitoring data that corresponds to the first indicator type and that is for the first to-be-monitored object, and the network device comprises the first to-be-monitored object;
a sending unit, configured to send a first message to the network device, wherein the first message comprises the extended ECA instance; and
a receiving unit, configured to receive a second message sent by the network device, wherein the second message comprises the first monitoring data.

23. The network management device according to claim 22, wherein the first condition is a condition, met by the first to-be-monitored object, of the performance indicator indicated by the first indicator type.

24. The network management device according to claim 22, wherein the first condition is a condition, met by the first to-be-monitored object, of a performance indicator indicated by a third indicator type, and the third indicator type is different from the first indicator type.

25. The network management device according to any one of claims 22 to 24, wherein
before the receiving unit receives the second message sent by the network device, the sending unit is further configured to send a request message to the network device, wherein the request message is used to request the network device to send the second message.

26. The network management device according to claim 25, wherein
when sending the request message to the network device, the sending unit is specifically configured to send the request message to the network device at a preset frequency.

27. The network management device according to any one of claims 22 to 25, wherein
before generating the extended event-condition-action ECA instance, the processing unit is further configured to obtain an extended ECA model, wherein the extended ECA model indicates the processing unit to generate the extended ECA instance based on the extended ECA model and an event that needs to be monitored.

28. The network management device according to any one of claims 22 to 27, wherein the first action further comprises a second object identifier and a second indicator type, the second object identifier indicates a second to-be-monitored object, the second indicator type indicates a performance indicator of the second to-be-monitored object, the extended ECA instance is further used to indicate the network device to send, to the network management device based on the first event and the first condition, second monitoring data that corresponds to the second indicator type and that is for the second to-be-monitored object, and the network device comprises the second to-be-monitored object; and
the second message further comprises the second monitoring data.

29. The network management device according to any one of claims 22 to 28, wherein the first action further comprises a group identifier, and the group identifier indicates a service type associated with the extended ECA instance.

30. The network management device according to any one of claims 22 to 29, wherein the first action further comprises an enabling flag, and the enabling flag is used to enable the first action.

31. The network management device according to any one of claims 22 to 30, wherein the first action further comprises a first operation type and/or a first indicator value type, the first operation type indicates an attribute of the first monitoring data, and the first indicator value type indicates a data type of the first monitoring data.

32. The network management device according to any one of claims 22 to 31, wherein
before the sending unit sends the first message to the network device, the processing unit is further configured to establish a network configuration protocol NETCONF session or a RESTCONF session between the network management device and the network device.

33. A network device, wherein the network device comprises:
a receiving unit, configured to receive a first message sent by a network management device, wherein the first message comprises an extended event-condition-action ECA instance, the extended ECA instance comprises a first event, a first condition, and a first action, the first action comprises a first object identifier and a first indicator type, the first object identifier indicates a first to-be-monitored object, the first indicator type indicates a performance indicator of the first to-be-monitored object, and the network device comprises the first to-be-monitored object;
a processing unit, configured to: when determining that the first condition is met, determine that the first event occurs; and
a sending unit, configured to: when the processing unit determines that the first event occurs, send a second message to the network management device, wherein the second message comprises first monitoring data, and the first monitoring data is monitoring data that corresponds to the first indicator type and that is for the first to-be-monitored object.

34. The network device according to claim 33, wherein the first condition is a condition, met by the first to-be-monitored object, of the performance indicator indicated by the first indicator type.

35. The network device according to claim 33, wherein the first condition is a condition, met by the first to-be-monitored object, of a performance indicator indicated by a third indicator type, and the third indicator type is different from the first indicator type.

36. The network device according to any one of claims 33 to 35, wherein
before the sending unit sends the second message to the network management device, the receiving unit is further configured to receive a request message sent by the network management device, wherein the request message is used to request the network device to send the second message.

37. The network device according to any one of claims 33 to 36, wherein the first action further comprises a second object identifier and a second indicator type, the second object identifier indicates a second to-be-monitored object, the second indicator type indicates a performance indicator of the second to-be-monitored object, the network device comprises the second to-be-monitored object, the second message further comprises the second monitoring data, and the second monitoring data is monitoring data that corresponds to the second indicator type and that is for the second to-be-monitored object.

38. The network device according to any one of claims 33 to 37, wherein the first action further comprises a group identifier, the group identifier indicates a service type associated with the extended ECA instance, and the first monitoring data is monitoring data associated with the service type.

39. The network device according to any one of claims 33 to 38, wherein the first action further comprises an enabling flag, the enabling flag is used to enable the first action, and before determining that the first condition is met, the processing unit is further configured to enable, based on the enabling flag, a function of sending the monitoring data, wherein the monitoring data is associated with running of the first action.

40. The network device according to any one of claims 33 to 39, wherein the second message further comprises the group identifier, and the group identifier indicates a service type associated with the extended ECA instance.

41. The network device according to any one of claims 33 to 40, wherein the second message further comprises an event identifier, and the event identifier indicates the first event.

42. The network device according to any one of claims 33 to 41, wherein the second message further comprises the first object identifier and the first indicator type.

43. A network system, wherein the network system comprises a network management device and a network device, the network management device is the network management device according to any one of claims 22 to 32, and the network device is the network device according to any one of claims 33 to 42.
